# EUROPÄISCHE PATENTSCHRIFT

(11) **EP 0 958 496 B1**
(45) Veröffentlichungstag und Bekanntmachung des Hinweises auf die Patenterteilung: **25.09.2002**
(21) Anmeldenummer: 98905382.2
(22) Anmeldetag: 02.02.1998
(51) Int. Cl.: G01N 30/46, B01D 15/08

(54) **VORRICHTUNG UND VERFAHREN ZUR PARALLEL-CHROMATOGRAPHIE**
METHOD AND DEVICE FOR PARALLEL CHROMATOGRAPHY
DISPOSITIF ET PROCEDE POUR CHROMATOGRAPHIE EN PARALLELE

(30) Priorität: 06.02.1997 DE 19704477
(43) Veröffentlichungstag der Anmeldung: 24.11.1999
(73) Patentinhaber: Solvay Pharmaceuticals GmbH, 30173 Hannover (DE)
(72) Erfinder: MESSINGER, Josef, D-31319 Sehnde (DE); GUNDLACH, Frank, D-30419 Hannover (DE); SINNER, Ernst, D-30419 Hannover (DE)
(74) Vertreter: Gosmann, Martin
(86) Internationale Anmeldenummer: EP9800535
(87) Internationale Veröffentlichungsnummer: WO98035227

(56) Entgegenhaltungen:
- EP-A- 0 425 297
- DE-A- 1 966 363
- DE-A- 2 545 997
- DE-A- 3 927 863
- FR-A- 2 268 267
- GB-A- 1 095 569

## Beschreibung

Die Erfindung betrifft eine Vorrichtung bzw. Apparatur sowie ein Verfahren zum gleichzeitigen, fraktionierenden Betrieb mehrerer parallel angeordneter Chromatographiesäulen. Die Apparatur und das Verfahren lassen sich insbesondere in der Forschung im Rahmen der organischen Synthese für die gleichzeitige, parallele Abtrennung, Isolierung und Aufreinigung mehrerer chemischer Verbindungen, z. B. potentieller neuer Arzneimittelwirkstoffe, insbesondere auch im semipräparativen Maßstab, vorteilhaft einsetzen.

Die Säulenchromatographie ist insbesondere in Form der Flüssig-Fest-Chromatographie im. Rahmen der organischen Synthese eine gebräuchliche Methode zur Auftrennung von Substanzgemischen. Die Säulenchromatographie ist daher heute in der Arzneimittelforschung für die Isolierung und nachfolgende Identifizierung von synthetisierten organischen Substanzen nicht mehr wegzudenken. Da die Identifizierung eines neuartigen Wirkstoffes noch immer ein schwieriges und aufwendiges Unterfangen ist, das die Synthese einer Vielzahl von chemischen Verbindungen erfordert, ist auch der Bedarf an apparativen und methodischen Innovationen ungebrochen. Sowohl für die Leitstruktursuche als auch die Leitstrukturoptimierung spielt hierbei die sogenannte Kombinatorische Synthese zunehmend eine immer wichtigere Rolle für die Bereitstellung von chemischen Verbindungen in immer kürzerer Zeit. In dem Maße, wie durch die Kombinatorische Synthese die systematische Molekülvariation sehr schnell zu einer Vielzahl verschiedener Verbindungen führt, müssen auch andere, im Rahmen der Wirkstoffsuche eingesetzte Methoden, z. B. auch die Methoden zur Auftrennung von Substanzgemischen bzw. zur Isolierung und Aufreinigung von einzelnen Substanzen, mit der erhöhten Synthesekapazität Schritt halten. Während es bei den klassischen Syntheseverfahren beispielsweise noch ausreichte, die synthetisierten Verbindungen einzeln und gegebenenfalls nacheinander einer Chromatographie zu unterwerfen, erfordern moderne Synthesemethoden mit hoher Kapazität wie die Kombinatorische Chemie auch eine erhöhte Durchsatzkapazität bei der Auftrennung von Substanzgemischen bzw. der Isolierung und Aufreinigung von synthetisierten Verbindungen, insbesondere auch im semipräparativen Maßstab.

Aus der FR 2 268 267 ist bereits eine semi-automatische Vorrichtung zur gleichzeitigen, parallelen Durchführung einer bestimmten Anzahl n von fraktionierenden Säulenchromatographien bekannt, mit
i. einer Bodenhalterung, die zur beweglichen Aufnahme eines oder mehrerer Reagenzglashalterung dient, wobei die Bodenhalterung gegebenenfalls auf einer oder beiden Kopfseiten noch eine parallel hierzu angeordnete Lösungsmittel-Abflußrinne aufweisen kann;
ii. einer Anzahl von n Chromatographiesäulen, die an einer Säulenträgerbrücke angeordnet sind;
iii. einem Lösungsmittelbehälter zur Aufnahme eines Elutionsmittels oder gegebenenfalls mehrere Lösungsmittelbehälter zur Aufnahme verschiedener Elutionsmittel;
iv. flexiblen Zuleitungen für die Zufuhr des oder der Elutionsmittel von dem oder den Lösungsmittelbehältern zu den Chromatographiesäulen;
v. einem Motorantrieb und einer elektronischen Steuereinrichtung zur automatischen Steuerung von insbesondere Zeittakt und relativer Position der beweglichen Bodenhalterung und der festen Säulenträgerbrücke.

Hierbei ist n die Anzahl der an der Säulenträgerbrücke angeordneten Chromatographiesäulen und stellt eine ganze Zahl größer 5 dar. Diese Vorrichtung des Standes der Technik weist jedoch noch erhebliche Nachteile auf. Da die Anzahl und die Menge der Fraktionen aufgrund der vorgesehenen Rotationsbewegung des Fraktionsträgers, d.h. der Reagenzglashalterung, deutlich beschränkt ist, ist diese Vorrichtung nur im analytischen Bereich einsetzbar und für einen semipräparativen Einsatz ungeeignet.

Es bestand daher die Aufgabe, eine einfache und effiziente Vorrichtung für die gleichzeitige, parallele Durchführung von Säulenchromatographien, insbesondere für den semipräparativen Maßstab, bereitzustellen.

Die Aufgabe wird gelöst durch die in den Ansprüchen angegebene Vorrichtung bzw. Apparatur sowie durch das beschriebene säulenchromatographische Verfahren.

Insbesondere betrifft die Erfindung daher eine Vorrichtung zur gleichzeitigen, parallelen Durchführung einer bestimmten Anzahl von n Säulenchromatographien, wobei die Vorrichtung umfaßt:
a) eine Bodenhalterung (1), vorzugsweise in Form einer Bodenwanne (1),
   - die zur Aufnahme eines oder mehrerer, entnehmbarer Reagenzglasgestelle (2) (Fraktionssammler) dient, wobei diese Reagenzglasgestelle (2) in ihren Abmessungen einzeln oder zusammen derart an die Innenabmessungen der Bodenhalterung (1), vorzugsweise der Bodenwanne (1), angepaßt sind, daß parallel zur Kopfseite der Bodenhalterung (1) eine Anordnung von m in einigem Abstand zueinander liegenden Reihen mit n in einigem Abstand nebeneinander stehenden Reagenzgläsern erzeugt werden kann,
   - wobei die Bodenhalterung (1), vorzugsweise die Bodenwanne (1), gegebenenfalls auf einer oder beiden Kopfseiten noch eine parallel hierzu (in "0-Position" und/oder "Endposition") angeordnete Lösungsmittel-Abflußrinne aufweisen kann;
b) je eine parallel zu jeder Längsseite der Bodenhalterung (1), vorzugsweise der Bodenwanne (1), angeordnete Laufschiene (3a, 3b) mit einem Motor-angetriebenen, steuerbaren Schlitten (8);
c) eine auf dem Schlitten (8) angeordnete und mittels diesem in einigem Abstand über die Bodenhalterung (1), vorzugsweise die-Bodenwanne (1), fahrbare Brücke (4), die als Träger zur fixen oder gegebenenfalls austauschbaren Aufnahme mehrerer Chromatographiesäulen dient, ("Säulenträgerbrücke" (4));
d) eine Anzahl von n Chromatographiesäulen (5), die in Reihe, parallel zur Kopfseite der Bodenhalterung (1), vorzugsweise der Bodenwanne (1), an der Säulenträgerbrücke (4) derart angeordnet sind, daß die zu durchfahrende Positionslinie der Tropfspitzen (5a) der Chromatographiesäulen (5) auf die Reagenzglaspositionen in den einzelnen Reihen abgestimmt ist, wobei die Chromatographiesäulen (5) gegebenenfalls für das Arbeiten unter Druck ausgelegt sein können;
e) einen Lösungsmittelbehälter (6) zur Aufnahme eines Elutionsmittels oder gegebenenfalls mehrere Lösungsmittelbehälter (6) zur Aufnahme verschiedener Elutionsmittel, wobei der oder die Lösungsmittelbehälter (6) gegebenenfalls auch als Druckbehälter ausgelegt sein können, und wobei der oder die Lösungsmittelbehälter (6) gegebenenfalls oberhalb der Chromatographiesäulen (5) auch mit der Säulenträgerbrücke (4) verbunden angeordnet sein können;
f) fixe oder flexible Zuleitungen (7) für die Zufuhr des oder der Elutionsmittel von dem oder den Lösungsmittelbehältern (6) zu den Chromatographiesäulen (5);
g) einen Motorantrieb zur Bewegung des Schlittens (8) mit der Säulenträgerbrücke (4) auf den Laufschienen (3a, 3b) und eine elektronische Steuereinrichtung zur automatischen Steuerung von insbesondere Zeittakt, Vorschubgeschwindigkeit und Position der Säulenträgerbrücke (4) längs der Bodenhalterung (1), vorzugsweise längs der Bodenwanne (1);
wobei n die Anzahl der an der Säulenträgerbrücke (4) angeordneten Chromatographiesäulen (5) bezeichnet und eine ganze Zahl größer 5 darstellt,
und worin m die Anzahl der möglichen Reagenzglasreihen bezeichnet, die von der Säulenträgerbrücke (4) überfahren werden können.

Die Merkmale a), b), e), f) und, soweit das Vorhandensein eines Motorantriebs, einer elektronischen Steuereinrichtung und Bodenhalterung sowie (fixen) Säulenträgerbrücke betroffen ist, auch das Merkmal g), sind im Prinzip bereits aus dem Stand der Technik gemäß FR 2 268 267 bekannt. Die erfindungsgemäße Vorrichtung unterscheidet sich jedoch von diesem Stand der Technik insbesondere durch: das Merkmal b) Bodenhalterung mit längsseitigen Laufschienen mit einem Motor-angetriebenen, steuerbaren Schlitten; das Merkmal c) die auf diesem Schlitten angebrachte, fahrbare Säulenträgerbrücke; und das gegenüber den Merkmalen (i) bis (v) des Standes der Technik unterschiedliche erfindungsgemäße Zusammenwirken der Merkmale a) bis g).

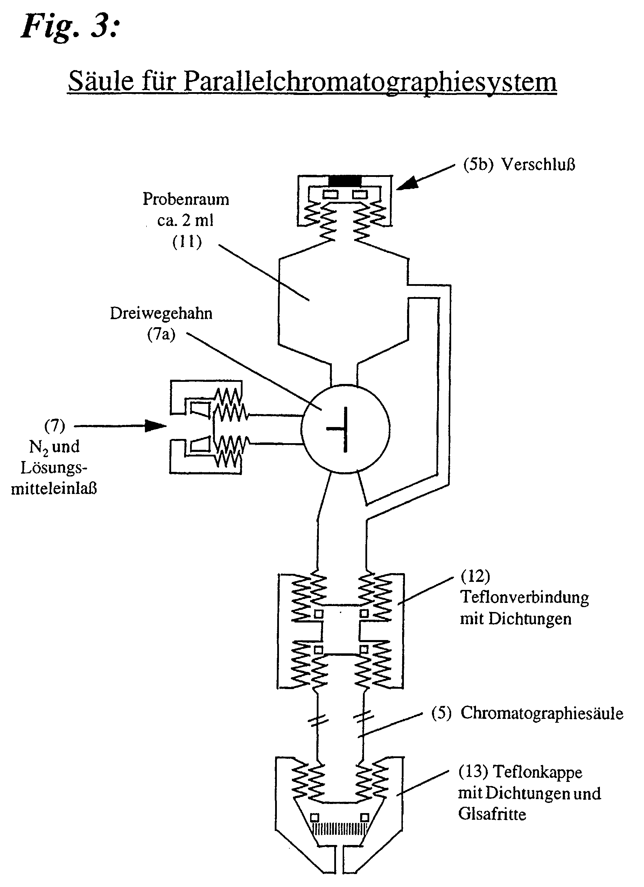

Die konkreten Dimensionen der Vorrichtung bzw. der einzelnen Komponenten sowie die genaue Anordnung der Komponenten kann entsprechend den Anforderungen und Wünschen des jeweiligen Anwenders ausgestaltet werden. Die konstruktive Ausgestaltung und Herstellung der erfindungsgemäßen Vorrichtung kann hierbei ohne besondere Probleme bewältigt werden. Neben den vorstehend beschriebenen Komponenten können gewünschtenfalls noch weitere Komponenten vorgesehen sein, die sich an weiteren Bedürfnissen des Anwenders oder sonstigen Erfordernissen (z. B. Sicherheitsvorschriften) orientieren. Beispielsweise kann die als Bodenwanne (1) ausgestaltete Bodenhalterung (1) mit einer Absaugeinrichtung zum Absaugen von Lösungsmit-teldämpfen aus dem Bereich der Bodenhalterung bzw. -wanne und deren Umgebung versehen sein. Ferner kann die gesamte Vorrichtung gewünschtenfalls auch mit einer Abdeckhaube bzw. Objektabsaugung ausgestattet werden, sofern wegen der Dimensionierung der Vorrichtung ein Arbeiten in konventionellen Laborabzügen nicht möglich ist. Die Bodenhalterung (1) selbst umfaßt zwei parallel verlaufende Längsseitenwände sowie zwei hierzu senkrecht stehende Querseitenwände (Kopfseiten bzw. eine Kopf- und eine Fußseite), sowie in der Ausführung als Bodenwanne (1) auch eine mit den Seitenwänden dicht verbundene Bodenplatte. Die Bodenhalterung bzw. -wanne (1) ist mit den Laufschienen (3a, 3b), die parallel zu den Längsseiten der Bodenhalterung bzw. -wanne angeordnet sind, fest verbunden. Somit kann der darin laufende Schlitten (8) mit der Säulenträgerbrücke (4) positionsgenau über die Bodenhalterung bzw. -wanne (1) gefahren werden Die in die Bodenhalterung bzw. -wanne (1) einstellbaren Reagenzglasgestelle (2) (Fraktionssammler) sind wie üblich konstruiert und eignen sich für die Aufnahme von marktüblichen Reagenzgläsern mit unterschiedlichen Durchmessern. Gewünschtenfalls können die Reagenzglasgestelle (2) mit einer passenden Abdeckung (2a) versehen sein, die als Trichter und Spritzschutz dient. Weiterhin kann eine vertauschungssichere Positionierung der Reagenzglasgestelle (2) von Vorteil sein, da hierdurch die weitere Bearbeitung der Proben erleichtert werden kann. Die Chromatographiesäulen (5) sind ebenfalls marktübliche Säulen gewünschter Dimensionen, z. B. Glasrohre mit Gewinde, die am Kopfende durch Schraubverschlüsse (5b) oder in anderer geeigneter Weise gegebenenfalls auch druckfest verschlossen werden können. Beispielweise Können, wie aus Fig. 3 und Zugehöriger Figurenerläuterung ersichtlich, die Tropfspitzen (5a) der Chromatographiesäulen (5) auch als eine, eine Teflonkappe mit Dichtungen und Glasfritte umfassender Säulenablauf ausgestaltet sein. Der Motorantrieb zur Bewegung des Schlittens (8) auf den Laufschienen (3a, 3b) sowie die elektronische Steuereinrichtung sind in konventioneller Weise konstruiert bzw. marktüblich erhältlich. Die elektronische Steuereinrichtung dient hierbei zur automatischen Steuerung von insbesondere Zeittakt, Vorschubgeschwindigkeit und Position der Säulenträgerbrücke (4) über den Reagenzgläsern sowie zur automatischen Abschaltung nach Erreichen der vorher eingegebenen Fraktionen-Anzahl (entspricht Anzahl der Reagenzglasreihen) oder der Endposition. In der Endposition (d.h. am Fußende der Bodenhalterung bzw. -wanne kann eine Lösungsmittel-Abflußrinne als Tropfauffangvorrichtung von Vorteil sein.

Für die Zuführung des oder der Elutionsmittel zu den Chromatographiesäulen können konventionelle Lösungsmittelbehälter (6) verwendet werden. Bei Durchführung der Säulenchromatographie unter Normaldruck können die Elutionsmittel daraus mittels einer oder mehrerer Pumpen, z. B. Schlauchpumpen, über die Zuleitungen (7) zu den Kopfseiten der Chromatographiesäulen (5) gepumpt werden.

In der Regel ist es zweckmäßig, mehr als 5 Säulen gleichzeitig zu betreiben, um die Vorteile der erfindungsgemäßen Vorrichtung zur Parallel-Chromatographie auszunutzen. In der Regel kann daher eine Anzahl von N = 6 bis 15, vorzugsweise eine Anzahl von N = 6 bis 10, Chromatographiesäulen (5) an der Säulenträgerbrücke (4) angeordnet sein. Gegebenenfalls können auch mehr Chromatographiesäulen (5) nebeneinander an der Säulenträgerbrücke (4) angeordnet werden, wobei dieses wegen des damit verbundenen erhöhten konstruktiven Aufwandes wenig empfehlenswert erscheint.

In einer weiteren Variante der Erfindung ist es vorgesehen, die parallele Säulenchromatographie unter Überdruck auszuführen. Die erfindungsgemäße Vorrichtung zeichnet sich hierbei dadurch aus, daß die Komponenten der Vorrichtung, soweit erforderlich - insbesondere die Chromatographiesäulen (5), der oder die Lösungsmittelbehälter (6), die Zuleitungen (7), die Verbindungselemente und Verschlußteile - konstruktiv für das Arbeiten unter Druck, vorzugsweise für das Arbeiten bei Überdrücken von bis zu 10 bar, ausgelegt sind.

In einer weiteren, vorteilhaften Variante der Erfindung ist es vorgesehen, den oder die Lösungsmittelbehälter (6) der erfindungsgemäßen Vorrichtung so anzuordnen, daß der oder die Lösungsmittelbehälter (6) oberhalb der Chromatographiesäulen (5) mit der Säulenträgerbrücke (4) fest verbunden ist bzw. sind.

Der Lösungsmittelbehälter (6) kann hierbei für die Anwendung unterschiedlicher Elutionsmittel im Innenraum unterteilt sein, oder aber sofern die parallelen Säulenchromatographien (5) überwiegend nur mit einem einheitlichen Elutionsmittel ausgeführt werden sollen, auch öhne Unterteilungen konstruiert sein. Weiterhin ist es auch möglich, mehrere separate Lösungsmittelbehälter (6) nebeneinander oberhalb der Chromatographiesäulen (5) an der Säulenträgerbrücke (4) anzuordnen. In jedem Fall ist es zweckmäßig, den oder die Lösungsmittelbehälter (6) in dieser Variante der Erfindung für das Arbeiten unter Überdruck auszulegen. Der oder die Lösungsmittelbehälter (6) bestehen daher in der Regel aus einem druckfesten Metallhohlkörper, der entweder selbst bereits lösungsmittelbeständig oder gewünschtenfalls auch mit einer lösungsmittelbeständigen Oberflächenbeschichtung ausgerüstet werden kann. Ferner weisen der oder die Lösungsmittelbehälter eine Einfüllöffnung für das Lösungsmittel auf, die druckfest verschlossen werden kann, sowie einen Einlaß für das Druckgas (z. B. Stickstoff oder Edelgas), zur Druckmessung und -kontrolle zweckmäßigerweise verbunden mit einem Manometer. Aus Sicherheitsgründen kann der Verschluß der Einfüllöffnung als Berstscheibe ausgelegt sein und ein Druckentlastungsprofil aufweisen. Zum Ablassen des Lösungsmittels besitzen der oder die Lösungsmittelbehälter (6) in der Regel an der Unterseite noch ein geeignetes Abflußventil.

Die Erfindung betrifft auch ein Verfahren zur gleichzeitigen, parallelen Durchführung einer bestimmten Anzahl von n fraktionierenden Säulenchromatographien mittels der erfindungsgemäßen Vorrichtung. Das erfindungsgemäße Verfahren zeichnet sich dadurch aus, daß n Chromatographiesäulen (5) zunächst in konventioneller Weise mit Festphase und Lösungsmittel befüllt und konditioniert werden; nachfolgend die Proben auf die Säulenköpfe aufgegeben und die Säulenköpfe gegebenenfalls verschlossen werden; worauf sodann in Position der Chromatographiesäulen (5) über der ersten Reagenzglasreihe (also in 1- bzw. Startposition) mit den eigentlichen fraktionierenden Säulenchromatographien begonnen wird, indem die Lösungsmittelzufuhr zu den Kopfenden der Chromatographiesäulen (5) geöffnet wird, worauf man entsprechend dem Programm der elektronischen Steuereinrichtung die Säulenträgerbrücke (4) über, die einzelnen Reagenzglasreihen im vorgegebenen Positions- und Zeittakt, gegebenenfalls bei vorgegebenem Überdruck unter Einhaltung eines vorgegebenen Verweilintervalles über der jeweiligen Reagenzglasreihe, beginnend von Reihe 1 bis zur Reihe m fährt und die einzelnen Fraktionen in den Reagenzgläsern auffängt. Die Befüllung und Konditionierung der Chromatographiesäulen (5) sowie die Probenaufgabe kann hierbei gegebenenfalls über einer parallel an der Kopfseite angeordneten Lösungsmittel-Abflußrinne (in "0-Position") durchgeführt werden, bevor die parallel angeordneten Chromatographiesäulen (5) zum Beginn der parallelen fraktionierenden Säulenchromatographie über die erste Reagenzglasreihe (in "1- bzw. Startpsoition") geführt werden.

Wird ein Reagenzglasgestell (2) mit der oben beschriebenen Abdeckplatte (2a) verwendet, kann die Säulenträgerbrücke (4) die Reagenzgläser bei entsprechender Verfahrensgeschwindigkeit auch in kontinuierlicher Bewegung über die Reagenzglasreihen hinweg gefahren werden. Die Verteilung der Fraktionenen auf die einzelnen Reagenzgläser erfolgt dann durch die entsprechenden trichterförmigen Ausgestaltungen der Abdeckplatte (2a) über den einzelnen Reagenzgläsern; die vorstehend im Rahmen des erfindungsgemäßen Verfahrens angegebene Verweilzeit entspricht hierbei dann dem Zeitintervall, das zum Überfahren eines Trichterkegels vorgegeben wird.

Die erfindungsgemäße Vorrichtung sowie das erfindungsgemäße Verfahren besitzen eine Reihe von Vorteilen gegenüber konventionellen Vorrichtungen bzw. Verfahren zur Säulenchromatographie. So ermöglicht es die Erfindung, gleichzeitig eine gewisse Anzahl von Chromatographiesäulen (5) parallel in einer automatisierten Arbeitsabfolge zu betreiben. Während der konventionelle Betrieb von Einzelsäulen nebeneinander oder zeitlich nacheinander durchgeführt eine größere Anzahl gleicher Geräte erfordert (z. B. mehrere Fraktionssammler, Pumpen etc.) und auch einen höheren Zeit-, Arbeits- und Kontrollaufwand für das Laborpersonal bei der Vorbereitung und Durchführung der Einzelchromatographien bedeutet, läßt sich das erfindungsgemäße Verfahren mit der erfindungsgemäßen Vorrichtung demgegenüber unter deutlichem Zeitgewinn in einer effizienten, automatisierten Arbeitsabfolge ausführen. Im Rahmen der automatisierten Arbeitsabfolge beim erfindungsgemäßen Verfahren lassen sich die einzelnen Schritte einer Säulenchromatographie effizient parallelisieren: Zunächst werden alle Säulen der Parallel-Chromatographie mit Festphase und Lösungsmittel befüllt sowie konditioniert; im nächsten Arbeitsschritt werden alle Säulen der Parallel-Chromatographie mit den Proben beschickt; insbesondere bei der Variante mit nur einem Lösungsmittelbehälter (6), der mit der Säulenträgerbrücke (4) verbunden ist, gestaltet sich zudem die Eluenzzufuhr bzw. auch die Druckerzeugung und -kontrolle für das Laborpersonal sehr effizient. Die erfindungsgemäß vorgeschlagene Vorrichtung und das Verfahren zur Parallel-Chromatographie ermöglichen zudem eine höhere Durchsatzkapazität gegenüber konventionell betriebenen Säulenchromatographien.

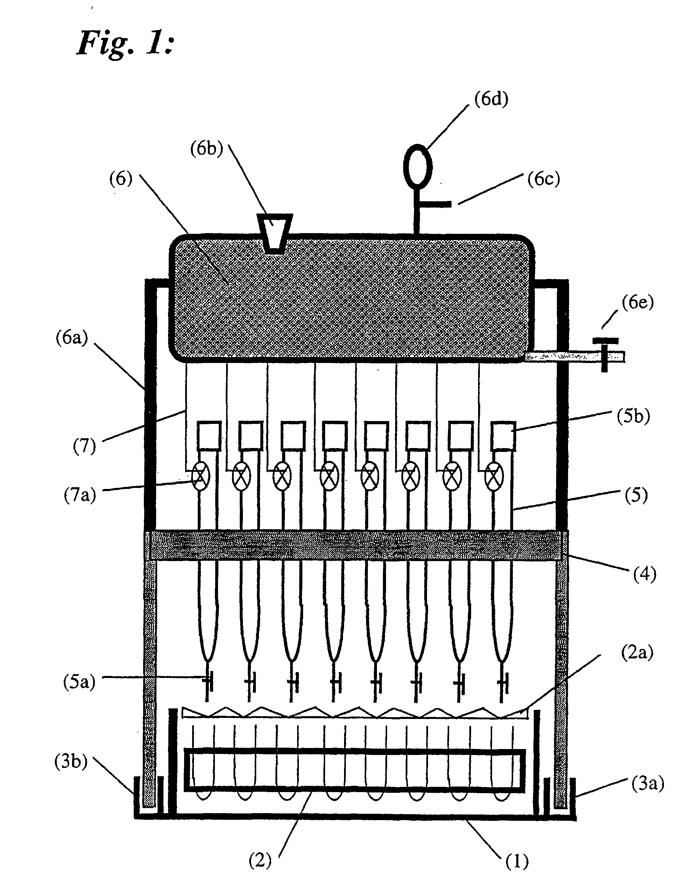

Weitere konstruktive Ausgestaltungen und Vorteile der Erfindung lassen sich den Figuren 1 bis 3 entnehmen, durch die die Erfindung beispielhaft weiter erläutert wird, ohne sie jedoch in ihrem Umfang zu beschränken.

### Erläuterungen zu den Figuren

### Figur 1:

Schematische Darstellung eines erfindungsgemäßen Parallel-Säulenchromatographie-Systems (Querschnittsansicht von der Kopf- bzw. Fußseite her gesehen; ein druckbeständiger Lösungsmittelbehälter, verbunden mit der Säulenträgerbrücke angeordnet; paralleler Betrieb von 8 Chromatographiesäulen. Die Bezugszeichen in Fig. 1 bedeuten hierbei:
- (1) =: Bodenwanne
- (2) =: Reagenzglasgestell mit m Reihen je 8 Reagenzgläsern in einer Reihe
- (2a) =: Platte (Abdeckung) als Spritzschutz und Einfüllvorrichtung (Trichter)
- (3a), (3b) =: Laufschienen an den Längsseiten der Bodenwanne
- (4) =: Säulenträgerbrücke zur fixen oder austauschbaren Aufnahme von Chromatographiesäulen; hier 8 Chromatographiesäulen
- (5) =: Chromatographiesäulen
- (5a) =: Tropfspitzen der Chromatographiesäulen mit oder ohne Ventil (z. B. Drehküken oder Magnetventile)
- (5b) =: Säulenverschluß; z. B. Schraubverschluß mit oder ohne Septum
- (6) =: Lösungsmittelbehälter; hier einteilige Form, Druck ausgelegt
- (6a) =: Träger zur Anordnung des Lösungsmittelbehälters und zur Verbindung mit der Säulenträgerbrücke
- (6b) =: Lösungsmitteleinlaß mit Berstscheibe und Drukkentlastungsventil; verschließbar
- (6c) =: Einlaß für Druckgas (z. B. Stickstoff, Edelgas, hier verbunden mit Manometer (6b) zur Druckmessung und gegebenenfalls Ventil zur Druckregulierung bzw. als Sicherheitsventil
- (6d) =: Manometer
- (6e) =: Notablaßhahn für Lösungsmittel
- (7) =: Lösungsmittelzuleitungen für die Zuleitung des Elutionsmittels vom Lösungsmittelbehälter zum Säulenkopf, mit Zulaufventil (7a); Die Zulaufventile (7a) können als Drehküken (z. B. Zwei- bzw. Dreiwegehahn) oder als Magnetventile ausgestaltet sein.

### Figur 2:

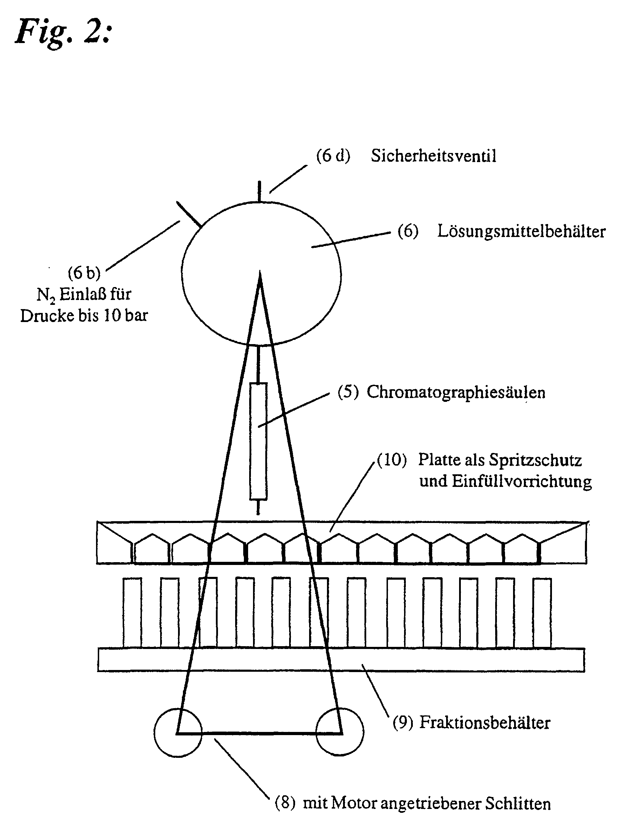

Parallel-Chromatographie-System von der Längsseite hier gesehen, schematisch. Die in Fig. 2 angegebenen Komponenten und Bezugszeichen bedeuten, soweit diese nicht bereits zu Fig. 1 angegeben sind:
- (8) =: mit Motor angetriebener Schlitten und Säulenträger brücke (4)
- (9) =: Fraktionsbehälter = Reagenzglasgestelle mit Reagenzgläser = (2)
- (10) =: Platte (Abdeckung)als Spritzschutz und Einfüllvorrichtung = (2a)

### Figur 3:

Säule für Parallel-Chromatographie-System, schematisch. Die in Fig. 3 angegebenen Komponenten und Bezugszeichen besitzen hierbei folgende Bedeutung.
- (5b) =: Schraubverschluß
- (7) =: Stickstoff- und Lösungsmitteleinlaß
- (7a) =: Dreiweghahn
- (11) =: Probenraum, ca. 2 ml in diesem Beispiel
- (12) =: Teflonverbindung mit Dichtungen zur Verbindung von Säule und Aufsatz (= Probenraum etc.)
- (13) =: Teflonkappe mit Dichtungen und Glasfritte als Säulenablauf (statt 5a)

## Patentansprüche

1. Vorrichtung zur gleichzeitigen, parallelen Durchführung einer bestimmten Anzahl von n fraktionierenden Säulenchromatographien, umfassend
a) eine Bodenhalterung (1), vorzugsweise in Form einer Bodenwanne (1),
- die zur Aufnahme eines oder mehrerer, entnehmbarer Reagenzglasgestelle (2) dient, wobei diese Reagenzglasgestelle (2) in ihren Abmessungen einzeln oder zusammen derart an die Innenabmessungen der Bodenhalterung (1), vorzugsweise der Bodenwanne (1), angepaßt sind, daß parallel zur Kopfseite der Bodenhalterung (1) eine Anordnung von m in einigem Abstand zueinander liegenden Reihen mit n in einigem Abstand nebeneinander stehenden Reagenzgläsern erzeugt werden kann,
- wobei die Bodenhalterung (1), vorzugsweise die Bodenwanne (1), gegebenenfalls auf einer oder beiden Kopfseiten noch eine parallel hierzu (in "0-Position" und/oder "Endposition") angeordnete Lösungsmittel-Abflußrinne aufweisen kann;
b) je eine parallel zu jeder Längsseite der Bodenhalterung (1), vorzugsweise der Bodenwanne (1), angeordnete Laufschiene (3a, 3b) mit einem Motor-angetriebenen, steuerbaren Schlitten (8);
c) eine auf dem Schlitten (8) angeordnete und mittels diesem in einigem Abstand längs über die Bodenhalterung (1), vorzugsweise über die Bodenwanne (1), fahrbare Brücke (4), die als Träger zur fixen oder gegebenenfalls austauschbaren Aufnahme mehrerer Chromatographiesäulen (5) dient, ("Säulenträgerbrücke" (4));
d) eine Anzahl von n Chromatographiesäulen (5), die in Reihe, parallel zur Kopfseite der Bodenhalterung (1), vorzugsweise der Bodenwanne (1), an der Säulenträgerbrücke (4) derart angeordnet sind, daß die zu durchfahrende Positionslinie der Tropfspitzen (5a) der Chromatographiesäulen (5) auf die Reagenzglaspositionen in den einzelnen Reihen abgestimmt ist, wobei die Chromatographiesäulen (5) gegebenenfalls für das Arbeiten unter Druck ausgelegt sein können;
e) einen Lösungsmittelbehälter (6) zur Aufnahme eines Elutionsmittels oder gegebenenfalls mehrere Lösungsmittelbehälter (6) zur Aufnahme verschiedener Elutionsmittel, wobei der oder die Lösungsmittelbehälter (6) gegebenenfalls auch als Druckbehälter ausgelegt sein können, und wobei der oder die Lösungsmittelbehälter (6) gegebenenfalls oberhalb der Chromatographiesäulen (5) auch mit der Säulenträgerbrücke (4) verbunden angeordnet sein können;
f) fixe oder flexible gegebenenfalls als Druckleitungen ausgelegte Zuleitungen (7) für die Zufuhr des oder der Elutionsmittel von dem oder den Lösungsmittelbehältern (6) zu den Chromatographiesäulen (5) ;
g) einen Motorantrieb zur Bewegung des Schlittens (8) mit der Säulenträgerbrücke (4) auf den Laufschienen (3a, 3b) und eine elektronische Steuereinrichtung zur automatischen Steuerung von insbesondere Zeittakt und Position der Säulenträgerbrücke (4) längs der Bodenhalterung (1) vorzugsweise längs der Bodenwanne (1) ;
wobei n die Anzahl der an der Säulenträgerbrücke (4) angeordneten Chromatographiesäulen (5) bezeichnet und eine ganze Zahl größer 5 darstellt,
und worin m die Anzahl der möglichen Reagenzglasreihen bezeichnet, die von der Säulenträgerbrücke (4) überfahren werden können.

2. Vorrichtung nach Anspruch 1, **dadurch gekennzeichnet, daß** die Anzahl n der Chromatographiesäulen (5) 6 bis 15, vorzugsweise 6 bis 10, beträgt.

3. Vorrichtung nach Anspruch 1, **dadurch gekennzeichnet, daß** die Komponenten der Vorrichtung, soweit erforderlich - insbesondere die Chromatographiesäulen (5), der oder die Lösungsmittelbehälter (6), die Zuleitungen (7), die Verbindungselemente und Verschlußteile - konstruktiv für das Arbeiten unter Druck, vorzugsweise für das Arbeiten bei Überdrükken von bis zu 10 bar, ausgelegt sind.

4. Vorrichtung nach Anspruch 1, **dadurch gekennzeichnet, daß** der oder die Lösungsmittelbehälter (6) oberhalb der Chromatographiesäulen (5) mit der Säulenträgerbrücke (4) fest verbunden angeordnet ist bzw. sind.

5. Vorrichtung nach Anspruch 1, **dadurch gekennzeichnet, daß** die Tropf spitzen (5a) der Chromatographiesäulen (5) durch einen, eine Teflonkappe mit Dichtungen und Glasfritte umfassenden Säulenablauf (13) ersetzt ist.

6. Verfahren zur gleichzeitigen, parallelen Durchführung einer bestimmten Anzahl von n fraktionierenden Säulenchromatographien mittels einer Vorrichtung gemäß einem der Ansprüche 1 bis 5, **dadurch gekennzeichnet, daß** n Chromatographiesäulen (5) zunächst in konventioneller Weise mit Festphase und Lösungsmittel befüllt und konditioniert werden; nachfolgend die Proben auf die Säulenköpfe aufgegeben und die Säulenköpfe gegebenenfalls verschlossen werden; sodann in Position der Chromatographiesäulen (5) über der ersten Reagenzglasreihe ("1- bzw. Startposition") mit den eigentlichen fraktionierenden Säulenchromatographien begonnen wird, indem die Lösungsmittelzufuhr zu den Kopfenden der Chromatographiesäulen (5) geöffnet wird, worauf man entsprechend dem Programm der elektronischen Steuereinrichtung die Säulenträgerbrücke (4) über die einzelnen Reagenzglasreihen im vorgegebenen Positions- und Zeittakt, gegebenenfalls bei vorgegebenem Überdruck, unter Einhaltung eines vorgegebenen Verweilintervalles über der jeweiligen Reagenzglasreihe, beginnend von Reihe 1 bis zur Reihe m fährt und die einzelnen Fraktionen in den Reagenzgläsern auffängt; wobei die Befüllung und Kondtionierung der Chromatographiesäulen (5) sowie die Probenaufgabe gegebenenfalls über einer parallel an der Kopfseite angeordneten Lösungsmittel-Abflußrinne (in "0-Position") durchgeführt werden kann, bevor die parallel angeordneten Chromatographiesäulen (5) zum Beginn der parallelen fraktionierenden Säulenchromatographie über die erste Reagenzglasreihe (in "1-bzw. Startposition") geführt wird.

## Claims

1. Apparatus for the simultaneous performance in parallel of a given number of n fractional column chromatography operations, comprising
a) a bottom holder (1), preferably in the form of a bottom trough (1),
- which serves to hold one or more removable test-tube racks (2), these test-tube racks (2) being adapted in terms of their dimensions, individually or together, to the internal dimensions of the bottom holder (1), preferably bottom trough (1), such that an arrangement of m rows spaced slightly apart from each other with n test tubes spaced slightly apart from and next to each other can be produced parallel to the top side of the bottom holder (1),
- wherein the bottom holder (1), preferably the bottom trough (1), may also optionally have a solvent drainage channel on one or both top sides which is arranged parallel thereto (in the "0 position" and/or "end position");
b) one rail (3a, 3b) in each case arranged parallel to each long side of the bottom holder (1), preferably the bottom trough (1), with a motor-driven, controllable carriage (8);
c) a bridge (4) arranged on the carriage (8) and movable by means thereof spaced slightly apart along the bottom holder (1), preferably the bottom trough (1), which bridge serves as a support for the fixed or optionally replaceable holding of a plurality of chromatographic columns (5), ("column support bridge" (4));
d) a number of n chromatographic columns (5), which are arranged in series, parallel to the top side of the bottom holder (1), preferably the bottom trough (1), on the column support bridge (4) such that the position line of the dropping tips (5a) of the chromatographic columns (5) which has to be moved is matched to the positions of the test tubes in the individual rows, the chromatographic columns (5) optionally being designed for operation under pressure;
e) a solvent container (6) for holding an eluent or optionally a plurality of solvent containers (6) for holding various eluents, the solvent container(s) (6) optionally also possibly being designed as pressure vessels, and the solvent container(s) (6) optionally also being arranged connected to the column support bridge (4) above the chromatographic columns (5);
f) fixed or flexible feed lines (7) optionally designed as pressure lines for supplying the eluent(s) from the solvent container(s) (6) to the chromatographic columns (5);
g) a motor drive for moving the carriage (8) with the column support bridge (4) on the rails (3a, 3b) and an electronic control apparatus for automatically controlling in particular the timing and position of the column support bridge (4) along the bottom holder (1), preferably along the bottom trough (1);
n being the number of chromatographic columns (5) arranged on the column support bridge (4) and representing an integer larger than 5,
and wherein m is the number of possible rows of test tubes over which the column support bridge (4) can travel.

2. An apparatus according to Claim 1, **characterised in that** the number n of the chromatographic columns (5) is 6 to 15, preferably 6 to 10.

3. An apparatus according to Claim 1, **characterised in that** the components of the apparatus, if required - in particular the chromatographic columns (5), the solvent container(s) (6), the feed lines (7), the connecting elements and closing parts - are designed for operation under pressure, preferably for operation at excess pressures of up to 10 bar.

4. An apparatus according to Claim 1, **characterised in that** the solvent container(s) (6) is/are securely connected to the column support bridge (4) above the chromatographic columns (5).

5. An apparatus according to Claim 1, **characterised in that** the dropping tips (5a) of the chromatographic columns (5) are replaced by a column exit (13) comprising a Teflon cap with seals and glass frit.

6. A method for the simultaneous performance in parallel of a given number of n fractional column chromatography operations by means of an apparatus in accordance with one of Claims 1 to 5, **characterised in that** n chromatographic columns (5) are first filled and conditioned in conventional manner with solid phase and solvent; subsequently the samples are placed on to the column heads and the column heads are optionally closed; then the fractional column chromatography operations proper are begun in the position of the chromatographic columns (5) over the first row of test tubes ("1 or starting position") by opening the supply of solvent to the head ends of the chromatographic columns (5), whereupon corresponding to the program of the electronic control means the column support bridge (4) is moved across the individual rows of test tubes at a preset position and timing, optionally at a preset excess pressure, maintaining a preset dwell time over the respective row of test tubes, starting from row 1 to row m, and the individual fractions are collected in the test tubes; the filling and conditioning of the chromatographic columns (5) and the charging of the samples optionally being carried out via a solvent discharge channel (in the "0 position") arranged in parallel on the top side, before the chromatographic columns (5) arranged in parallel are moved across the first row of test tubes (in the "1 or starting position") at the start of the parallel fractional column chromatography operation.

## Revendications

1. Dispositif pour réaliser simultanément et en parallèle un nombre déterminé de n chromatographies sur colonnes de fractionnement, comportant :
a) un support au sol (1), de préférence sous la forme d'une cuve au sol (1),
- qui sert à loger un ou plusieurs râteliers à éprouvettes amovibles (2), ces râteliers à éprouvettes (2) étant adaptés dans leurs dimensions, individuellement ou conjointement, aux dimensions internes du support au sol (1), de préférence de la cuve au sol (1), de façon telle que puisse être établie, parallèlement au côté supérieur du support au sol (1), une disposition de m rangées, placées à une certaine distance l'une de l'autre, de n éprouvettes disposées côte à côte à une certaine distance l'une de l'autre,
- le support au sol (1), de préférence la cuve au sol (1), pouvant éventuellement présenter encore, sur un ou les deux côtés supérieurs, une goulotte d'écoulement de solvant disposée parallèlement à ceux-ci (en "position 0" et/ou en "position finale") ;
b) une glissière (3a, 3b) disposée parallèlement à et de chaque côté longitudinal du support au sol (1), de préférence de la cuve au sol (1), équipée d'un chariot (8) pouvant être commandé, entraîné par moteur ;
c) un pont (4) disposé sur le chariot (8) et déplaçable au moyen de ce dernier, le long et à une certaine distance au-dessus du support au sol (1), de préférence de la cuve au sol (1), lequel pont sert de support destiné à recevoir, à demeure ou éventuellement de façon interchangeable, plusieurs colonnes de chromatographie (5) ("pont de support de colonnes" (4)) ;
d) un nombre de n colonnes de chromatographie (5) qui sont disposées en rangée, parallèlement au côté supérieur du support au sol (1), de préférence de la cuve au sol (1), sur le pont de support de colonnes (4), de façon telle que la ligne de position, à parcourir, des pointes de compte-gouttes (5a) des colonnes de chromatographie (5) coïncide avec les positions des éprouvettes dans les différentes rangées, les colonnes de chromatographie (5) pouvant être éventuellement conçues pour le travail sous pression ;
e) un réservoir de solvant (6) destiné à recevoir un agent d'élution ou éventuellement plusieurs réservoirs de solvant (6) destinés à recevoir des agents d'élution différents, le ou les réservoirs de solvant (6) pouvant éventuellement aussi être conçus en tant que réservoirs à pression, et le ou les réservoirs de solvant (6) pouvant être éventuellement disposés au-dessus des colonnes de chromatographie (5), reliés aux ponts de support de colonnes (4) ;
f) des conduites d'alimentation (7) fixes ou flexibles, éventuellement conçues en tant que conduites sous pression (7), pour l'apport du ou des agent(s) d'élution aux colonnes de chromatographie (5), depuis le ou les réservoir(s) de solvant (6) ;
g) un entraînement motorisé permettant de déplacer le chariot (8), avec le pont de support de colonnes (4), sur les glissières (3a, 3b) et un dispositif électronique de commande permettant de commander automatiquement, en particulier, la cadence et la position du pont de support de colonnes (4) le long du support au sol (1), de préférence le long de la cuve au sol (1) ;
où n désigne le nombre des colonnes de chromatographie (5) disposées sur le pont de support de colonnes (4) et représente un nombre entier supérieur à 5,
et où m désigne le nombre des rangées d'éprouvettes possibles pouvant être franchies par le pont de support de colonnes (4).

2. Dispositif selon la revendication 1, **caractérisé en ce que** le nombre n des colonnes de chromatographie (5) est de 6 à 15, de préférence de 6 à 10.

3. Dispositif selon la revendication 1, **caractérisé en ce que** les composants du dispositif, si nécessaire - en particulier les colonnes de chromatographie (5), le ou les réservoir(s) de solvant (6), les conduites d'alimentation (7), les éléments d'assemblage et les pièces de fermeture - sont conçus, dans leur construction, pour le travail sous pression, de préférence pour le travail à des surpressions allant jusqu'à 10 bars.

4. Dispositif selon la revendication 1, **caractérisé en ce que** le ou les réservoir(s) de solvant (6) est ou sont disposé(s) au-dessus des colonnes de chromatographie (5) en étant relié(s) rigidement au pont de support de colonnes (4).

5. Dispositif selon la revendication 1, **caractérisé en ce que** les pointes du compte-gouttes (5a) des colonnes de chromatographie (5) sont remplacées par un orifice de sortie de colonne (13) comprenant un capuchon en Téflon avec garnitures d'étanchéité et fritte de verre.

6. Procédé pour la réalisation simultanée et en parallèle d'un nombre déterminé de n chromatographies sur colonne de fractionnement au moyen d'un dispositif selon l'une des revendications 1 à 5, **caractérisé en ce que** n colonnes de chromatographie (5) sont tout d'abord remplies, de façon traditionnelle, avec une phase solide et un solvant et conditionnées ; les échantillons sont ensuite chargés sur les têtes de colonne et les têtes de colonne sont éventuellement fermées ; ensuite, dans la position des colonnes de chromatographie (5) au-dessus de la première rangée d'éprouvettes ("position 1" ou "position de départ"), on commence les chromatographies sur colonne de fractionnement à proprement parler, en ouvrant l'alimentation en solvant vers les extrémités de tête des colonnes de chromatographie (5), suite à quoi, en conformité avec le programme du dispositif électronique de commande, on déplace le pont de support de colonnes (4) à partir de la rangée 1 jusqu'à la rangée m au-dessus des différentes rangées d'éprouvettes, selon une cadence et un cycle de position prédéfinis, éventuellement avec une surpression prédéfinie, en respectant un intervalle de séjour prédéfini au-dessus de chaque rangée d'éprouvettes considérée, et on recueille les différentes fractions dans les éprouvettes ; le remplissage et le conditionnement des colonnes de chromatographie (5), ainsi que le chargement des échantillons, pouvant être éventuellement réalisés par l'intermédiaire d'une goulotte d'écoulement de solvant disposée parallèlement sur le côté supérieur (dans la "position 0"), avant que les colonnes de chromatographie (5) disposées en parallèle soient amenées au-dessus de la première rangée d'éprouvettes au début de la chromatographie sur colonne de fractionnement parallèle (en "position 1 ou de départ").
